# EUROPÄISCHE PATENTSCHRIFT

(11) **EP 4 433 344 B1**
(45) Veröffentlichungstag und Bekanntmachung des Hinweises auf die Patenterteilung: **01.04.2026**
(21) Anmeldenummer: 22800274.7
(22) Anmeldetag: 11.10.2022
(51) Int. Cl.: B60W 50/023, B60W 50/035, B60W 60/00

(54) **STEUERVORRICHTUNG FÜR EIN FAHRZEUG UND VERFAHREN ZUM STEUERN EINES FAHRZEUGS**
CONTROL APPARATUS FOR A VEHICLE AND METHOD FOR CONTROLLING A VEHICLE
APPAREIL DE COMMANDE POUR UN VÉHICULE ET PROCÉDÉ DE COMMANDE D'UN VÉHICULE

(30) Priorität: 19.11.2021 DE 102021213022
(43) Veröffentlichungstag der Anmeldung: 25.09.2024
(73) Patentinhaber: ZF Friedrichshafen AG, 88046 Friedrichshafen (DE)
(72) Erfinder: HUBRACHT, Bastian, 88682 Salem (DE); MORSU, ShShruthi Reddy, Hyderabad,Telangana 500011 (IN); HEGEDÜS-BITE, Istvan, 88097 Eriskirch (DE); BICHELMEIER, Hubert, 88069 Tettnang (DE); ALSHARIF, Mohammad, 88069 Tettnang (DE); BAGCI, Ilker, 88213 Ravensburg (DE); KWANDT, Manuel, 32423 Minden (DE)
(74) Vertreter: ZF Friedrichshafen AG
(86) Internationale Anmeldenummer: PCT/EP2022/078164
(87) Internationale Veröffentlichungsnummer: WO 2023/088612

(56) Entgegenhaltungen:
- EP-B1- 2 771 227
- DE-A1- 102018 203 617
- DE-A1- 102020 112 822

## Beschreibung

Die vorliegende Erfindung bezieht sich auf eine Steuervorrichtung für ein Fahrzeug.

Die Automobilbranche erlebt gerade einen Umbruch bei der elektrisch-elektronischen Architektur, kurz E/E Architektur. Von den klassischen Funktions-Steuergeräten geht der Trend gerade zu einer Verdichtung der Funktionen auf wenige Steuergeräte. Aus DE 10 2018 203 617 A1 ist eine Steuervorrichtung für eine Fahrzeug gemäß den Merkmalen des Oberbegriffs des Anspruchs 1 bekannt.

Vor diesem Hintergrund schafft die vorliegende Erfindung eine verbesserte Steuervorrichtung für ein Fahrzeug und ein verbessertes Verfahren zum Steuern eines Fahrzeugs gemäß den Hauptansprüchen. Vorteilhafte Ausgestaltungen ergeben sich aus den Unteransprüchen und der nachfolgenden Beschreibung.

Der hier vorgestellte Ansatz ermöglicht eine Steuervorrichtung, die neben einer Hauptdomain zum Steuern einer Bewegung des Fahrzeugs zumindest eine weitere Domain zum Steuern einer weiteren Funktionalität umfasst. Vorteilhafterweise kann durch die Verbindung mehrerer Domains eine hohe Effizienz erzielt werden, die Latenzzeit reduziert und auch Energie eingespart werden.

Es wird eine Steuervorrichtung für ein Fahrzeug vorgestellt, die ein Bewegungsmodul zum Steuern einer Bewegung des Fahrzeugs aufweist. Das Bewegungsmodul ist als eine erste Domain ausgeführt und weist eine Sensorschnittstelle zum Empfangen von Sensorsignalen sowie eine Trajektorienschnittstelle zum Empfangen eines eine Trajektorie des Fahrzeugs repräsentierenden Trajektoriensignals auf. Das Bewegungsmodul weist weiterhin eine Aktuatorschnittstelle zum Ausgeben von Aktuatorsignalen zum Ansteuern von Aktuatoren auf. Ferner weist das Bewegungsmodul eine Bestimmeinrichtung zum Bestimmen der Aktuatorsignale unter Verwendung der Sensorsignale und des Trajektoriensignals auf. Die Steuervorrichtung umfasst ein weiteres Modul, das als eine weitere Domain ausgeführt ist und über eine Domainschnittstelle mit der ersten Domain verbunden ist.

Das Fahrzeug kann als ein Kraftfahrzeug, beispielsweise als ein Personenkraftwagen (PKW), Lastkraftwagen (LKW) oder beispielsweise als ein Nutzfahrzeug realisiert sein. Die Steuervorrichtung kann dabei als ein fahrzeuginternes Steuergerät ausgeformt sein, das eine mehrere Domains ermöglichende Architektur aufweisen kann. Somit kann die Bewegung des Fahrzeugs über die erste Domain und beispielsweise eine weitere Fahrzeugfunktionen des Fahrzeugs über die weitere Domain gesteuert werden. Die weitere Domain kann beispielsweise ein Energiemanagement des Fahrzeugs, ein Sicherheitssystem des Fahrzeugs oder ein Unterhaltungssystem des Fahrzeugs betreffen. Vorteilhafterweise kann eine Mehrzahl von weiteren Domains über die Domainschnittstelle mit der ersten Domain verbunden werden. Auf diese Weise kann eine anpassbarer Multi-Domain-Steuergerät realisiert werden. Vorteilhafterweise kann dafür eine offen gestaltete Architektur für verschiedene Domains genutzt und eine intelligente Software zur einfachen Verbindung der Domains eingesetzt werden. Gemäß einer Ausführungsform kann daher zumindest eine der weiteren Domains kann austauschbar sein. Jede der weiteren Domains kann zum Umsetzen einer weiteren Fahrzeugfunktion vorgesehen sein. Die Fahrzeugfunktionen können beispielsweise unter den Begriff der Fahrerassistenzsysteme fallen, die serienmäßig oder alternativ individuell wählbar und in die Steuervorrichtung implementiert sein können. Die Sensorsignale können beispielsweise von Fahrzeugsensoren bereitgestellt werden, die lediglich optional jeweils für mindestens eine Fahrzeugfunktion verwendet werden können. Die Aktuatoren können beispielsweise als Antriebe oder Elektromotoren ausgeformt sein oder mit solchen gekoppelt sein. Durch das Bestimmen der Aktuatorsignale können vorteilhafterweise die für eine auszuführende Fahrzeugfunktion benötigten Aktuatoren des Fahrzeugs angesteuert werden. Vorteilhafterweise kann die Steuervorrichtung eine Vielzahl von unterschiedlichen Fahrzeugfunktionen ansteuern und zusätzlich oder alternativ durchführen, sodass eine Anzahl von in dem Fahrzeug verbauten Steuergeräten reduziert werden kann. Dadurch kann wiederum vorteilhafterweise Bauraum des Fahrzeugs eingespart und zusätzlich oder alternativ zu anderweitigen Zwecken genutzt werden.

Die Steuervorrichtung weist erfindungsgemäß eine elektronische Schaltung auf, die ausgebildet ist, um sowohl eine Funktionalität der Bestimmeinrichtung als auch eine Funktionalität des weiteren Moduls bereitzustellen. Somit können Funktionalitäten der ersten Domain und der mindestens einen weiteren Domain unter Verwendung zumindest eines gemeinsam genutzten elektronischen Bauteils, beispielsweise eines Mikroprozessors, umgesetzt werden. Beispielsweise kann die Steuervorrichtung eine einzige Leiterplatte umfassen, auf der die Funktionalitäten der ersten Domain und der mindestens einen weiteren Domain umgesetzt sind. Auf diese Weise können unterschiedliche Fahrzeugfunktionen unter Verwendung einer Steuervorrichtung ausgeführt sein. Die Steuervorrichtung kann dabei als ein Steuergerät bezeichnet werden, das beispielsweise von einem eigenen Gehäuse umgeben ist. Vorteilhafterweise können die unterschiedlichen Domains über die Domainschnittstelle untereinander Daten austauschen. Dadurch wird im Unterschied zu separat realisierten Steuergeräten eine schnelle Datenverarbeitung ermöglicht.

Gemäß einer Ausführungsform kann das Bewegungsmodul eine Fahrerschnittstelle zum Empfangen eines Fahrersignals zum Ansteuern der Aktuatoren und einen Prioritätsmanager aufweisen. Der Prioritätsmanager kann ausgebildet sein, um entweder die Aktuatorsignale oder das Fahrersignal an die Aktuatorschnittstelle bereitzustellen. Vorteilhafterweise kann das Bewegungsmodul ausgebildet sein, um beispielsweise Fahrzeugbewegungen sowohl basierend auf automatisiert generierten als auch basierend auf von einem Fahrer manuell getätigten Anweisungen zu steuern. Unter Verwendung des Prioritätsmanagers kann automatisiert entschieden werden, ob die automatisiert generierten oder die manuell getätigten Anweisungen Vorrang haben, wenn eine parallele Ausführung nicht möglich oder sinnvoll ist. Das Fahrersignal kann beispielsweise eine von dem Fahrer des Fahrzeugs gewünschte Lenkbewegung repräsentieren, die der Fahrer beispielsweise unter Verwendung eines Lenkrades des Fahrzeugs vorgeben kann. Der Aktuator kann beispielsweise unter Verwendung des Fahrersignals einen Lenkwinkel einstellen, sodass das Fahrzeug in die vom Fahrer in die gewünschte Richtung fahren kann. Das bedeutet kurzum, dass das Fahrersignal beispielsweise eine manuelle Steuerung des Fahrzeugs durch den Fahrer repräsentieren kann.

Weiterhin kann die Sensorschnittstelle ausgebildet sein, um die Sensorsignale von Sensoren, wie beispielsweise von einer Umfelderfassungseinrichtung, einem Schalter, einem Temperatursensor, einem Regensensor, einem Sensor eines Lenkaktuators, einem Sensor eines Bremsaktuators und zusätzlich oder alternativ einem Sensor eines Fahrwerkaktuators empfangen zu können. Beispielsweise können die Sensorsignale Sensordaten repräsentieren, die vorteilhafterweise als Eingangsgrößen für sicherheitsrelevante Fahrzeugfunktionen verwendet werden können. Zusätzlich oder alternativ können die Sensorsignale solche Sensordaten repräsentieren, die zum Unterstützen des Fahrers nutzbar sein können, wie beispielsweise Sensoren einer Einparkhilfe oder einer Rückfahrkamera.

Gemäß einer Ausführungsform kann die Aktuatorschnittstelle ausgebildet sein, um die Aktuatorsignale an den Lenkaktuator, den Bremsaktuator und zusätzlich oder alternativ an den Fahrwerkaktuator auszugeben. Beispielsweise können unter Verwendung der Aktuatorsignale solche Aktuatoren angesteuert werden, welche eine Bewegung des Fahrzeugs beeinflussen können.

Die Bestimmeinrichtung kann eine Sensoreinrichtung zum Bestimmen eines kombinierten Sensorsignals aus den Sensorsignalen, eine Optimierungseinrichtung zum Bestimmen eines optimierten Trajektoriensignals aus dem Trajektoriensignal und dem kombinierten Sensorsignal, und eine Dekodiereinrichtung zum Bestimmen der Aktuatorsignale aus dem optimierten Trajektoriensignal aufweisen. Vorteilhafterweise kann die Steuervorrichtung mittels der Bestimmeinrichtung und ihrer Einrichtung eine auszuführende Fahrzeugfunktion höher priorisieren als andere, sodass beispielsweise eine Fahrsicherheit sowohl für den Fahrer des Fahrzeugs als auch für weitere Verkehrsteilnehmer erhöht werden kann. Beispielsweise können dazu sich auf Fahrzeugbewegungen auswirkende Fahrzeugfunktionen, wie beispielsweise ein Notbremsassistent höher priorisiert werden, als eine Handlung des Fahrers, wie beispielsweise das Betätigen eines Gaspedals des Fahrzeugs.

Gemäß einer Ausführungsform können die Sensoreinrichtung, die Optimierungseinrichtung und die Dekodiereinrichtung redundant ausgeformt sein. Vorteilhafterweise kann durch die redundante Realisierung der Sensoreinrichtung, der Optimierungseinrichtung und der Dekodiereinrichtung eine Ausfallsicherheit erhöht werden.

Die Bestimmeinrichtung kann unter Verwendung redundanter Mikroprozessoren realisiert sein. Die Mikroprozessoren können als separate Kerne einer integrierten Schaltung oder als separate integrierte Schaltungen realisiert sein. Vorteilhafterweise kann dadurch eine Funktionalität der Bestimmeinrichtung auch bei Ausfall eines der Mikroprozessoren aufrechterhalten werden.

Weiterhin kann die Steuervorrichtung oder kann das Bewegungsmodul zwei redundante Energieversorgungsschnittstellen und eine Energieversorgungseinrichtung zum Versorgen des Bewegungsmoduls mit Energie aus zumindest einer der Energieversorgungsschnittstellen aufweisen. Vorteilhafterweise kann dadurch eine die Wahrscheinlichkeit eines Systemausfalls reduziert werden kann. Vorteilhafterweise kann die Energieversorgungseinrichtung auch zum Versorgen des zumindest einen weiteren Moduls mit Energie verwendet werden. Auf diese Weise kann auch das weitere Modul von der erhöhten Versorgungssicherheit des Bewegungsmoduls profitieren.

Gemäß einer Ausführungsform kann das Bewegungsmodul eine Standversorgungseinrichtung aufweisen, die ausgebildet sein kann, um einen Teil des Bewegungsmoduls zu deaktivieren, wenn sich das Fahrzeug in einem Ruhezustand befindet. Gemäß einer Ausführungsform kann das Bewegungsmodul mindestens so lange einen vollen Funktionsumfang gewährleisten, bis ein Stillstand des Fahrzeugs erreicht wurde. Im Ruhezustand können beispielsweise nicht benötigte Baugruppen oder Funktionseinheiten deaktiviert werden, beispielsweise wenn das Fahrzeug abgestellt oder geparkt wurde. Vorteilhafterweise kann dadurch der Energieverbrauch reduziert werden.

Die Steuervorrichtung oder das Bewegungsmodul können eine Sicherheitseinrichtung aufweisen, die mit der Sensorschnittstelle, der Bestimmeinrichtung und der Aktuatorschnittstelle verbunden sein kann. Vorteilhafterweise kann die Sicherheitseinrichtung verwendet werden, um eine sichere Ansteuerung der Aktuatoren zu gewährleisten. Beispielsweise können unter Verwendung der Sicherheitseinrichtung ASIL-Anforderungen (Automotive Safety Integrity Level) gewährleistet werden.

Weiterhin wird ein Verfahren zum Steuern eines Fahrzeugs vorgestellt, wobei das Verfahren einen Schritt des Empfangens von Sensorsignalen durch eine erste Domain, einen Schritt des Empfangens eines eine Trajektorie des Fahrzeugs repräsentierenden Trajektoriensignals durch die erste Domain, einen Schritt des Bestimmens von Aktuatorsignalen unter Verwendung der Sensorsignale und des Trajektoriensignals innerhalb der ersten Domain, und einen Schritt des Ausgebens von Aktuatorsignalen zum Ansteuern von Aktuatoren durch die erste Domain.

Das Verfahren kann vorteilhafterweise unter Verwendung einer Steuervorrichtung in einer zuvor genannten Variante durchgeführt oder angesteuert werden.

Die Erfindung wird anhand der beigefügten Zeichnungen beispielhaft näher erläutert. Es zeigen:
- Fig. 1: eine schematische Darstellung eines Fahrzeugs mit einer Steuervorrichtung gemäß einem Ausführungsbeispiel;
- Fig. 2: eine schematische Darstellung eines Ausführungsbeispiels einer Steuervorrichtung;
- Fig. 3: eine schematische Darstellung eines Ausführungsbeispiels einer Steuervorrichtung;
- Fig. 4: eine schematische Darstellung eines Ausführungsbeispiels einer Steuervorrichtung; und
- Fig. 5: ein Ablaufdiagramm eines Ausführungsbeispiels eines Verfahrens zum Steuern eines Fahrzeugs.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

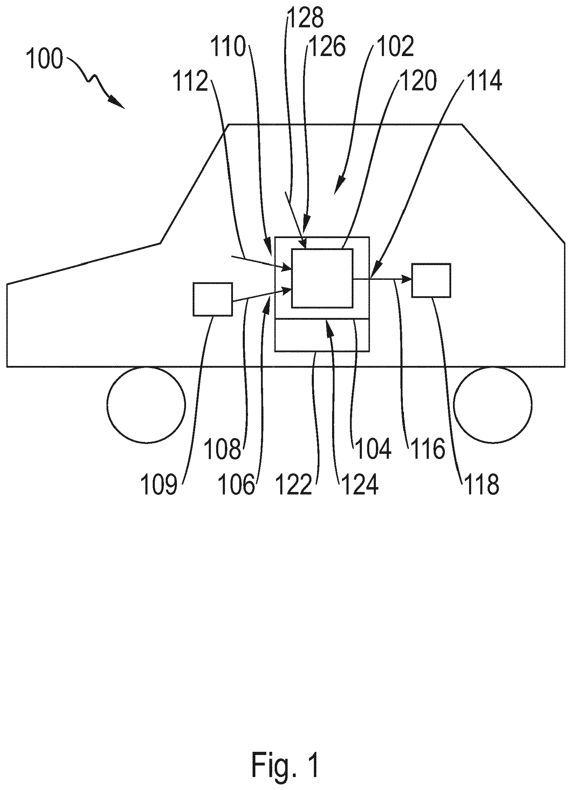

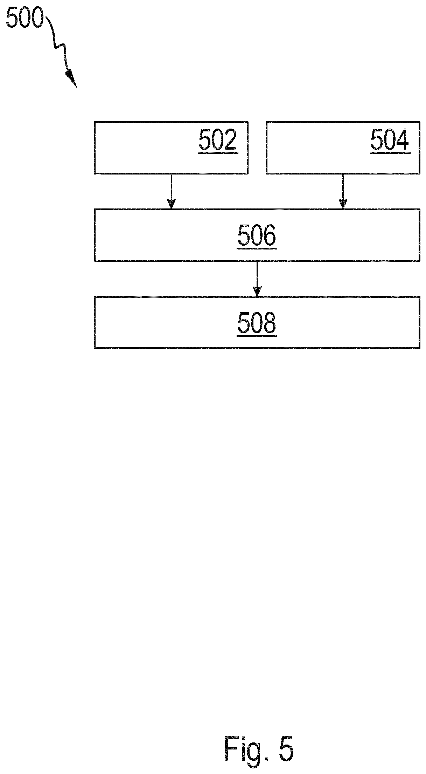

Fig. 1 zeigt eine schematische Darstellung eines Fahrzeugs 100 mit einer Steuervorrichtung 102 gemäß einem Ausführungsbeispiel. Das Fahrzeug 100 ist dabei gemäß diesem Ausführungsbeispiel als ein zweispuriges Kraftfahrzeug, genauer gesagt als ein PKW realisiert. Die Steuervorrichtung 102 ist beispielsweise als ein Steuergerät ausgeformt oder in einem Steuergerät realisierbar und ist beispielsweise ausgebildet, um ein Verfahren zum Steuern des Fahrzeugs 100 anzusteuern oder durchzuführen, wie es beispielsweise in Fig. 5 beschrieben ist.

Die Steuervorrichtung 102 weist beispielsweise ein Bewegungsmodul 104 zum Steuern einer Bewegung des Fahrzeugs auf. Das Bewegungsmodul 104 ist dabei als eine erste Domain innerhalb der Steuervorrichtung 102 ausgeführt. Das Bewegungsmodul 104 weist eine Sensorschnittstelle 106 zum Empfangen von Sensorsignalen 108 auf, die lediglich optional von einer Sensoreinheit 109 bereitgestellt werden. Die Sensoreinheit 109 ist beispielsweise als Umfelderfassungseinrichtung, Schalter, Temperatursensor, Regensensor, Sensor eines Lenkaktuators, Sensor eines Bremsaktuators und/oder als Sensor eines Fahrwerkaktuators realisiert oder weist beispielsweise mindestens einen davon auf. Weiterhin weist das Bewegungsmodul 104 eine Trajektorienschnittstelle 110 zum Empfangen eines eine Trajektorie des Fahrzeugs 100 repräsentierenden Trajektoriensignals 112 auf. Die Trajektorie gibt beispielsweise einen unmittelbar bevorstehenden Bewegungsverlauf des Fahrzeugs 100 vor. Wenn das Fahrzeug 100 teil- oder vollautomatisiert fährt, wird die Trajektorie beispielsweise automatisiert bestimmt. Weiterhin weist das Bewegungsmodul 104 eine Aktuatorschnittstelle 114 zum Ausgeben von Aktuatorsignalen 116 zum Ansteuern von Aktuatoren 118 auf. Die Aktuatoren 118 sind beispielsweise als Lenkaktuator, Bremsaktuator und/oder als Fahrwerkaktuator ausgeformt. Weiterhin weist das Bewegungsmodul 104 eine Bestimmeinrichtung 120 zum Bestimmen der Aktuatorsignale 116 unter Verwendung der Sensorsignale 108 und des Trajektoriensignals 112 auf. Somit können die Aktoren 118 unter Verwendung der Bestimmeinrichtung 120 basierend auf den Sensorsignalen 108 und dem Trajektoriensignals 112 automatisiert angesteuert werden.

Gemäß diesem Ausführungsbeispiel weist die Steuervorrichtung 102 zusätzlich ein weiteres Modul 122 auf, das als eine weitere Domain ausgeführt ist und über eine Domainschnittstelle 124 mit der ersten Domain verbunden ist. Die Domains und somit das Bewegungsmodul 104 und das weitere Modul 122 sind gemäß einem Ausführungsbeispiel unter Verwendung ein und derselben elektronischen Schaltung innerhalb der Steuervorrichtung 102 realisiert. Optional umfasst die Steuervorrichtung 102 ein Gehäuse, das beispielsweise eine Leiterplatte umschließt, die ein oder mehrere elektronische Bauelemente trägt, die zum Umsetzten der Funktionalitäten der Domains benötigt werden.

Lediglich optional weist das Bewegungsmodul 104 ferner eine Fahrerschnittstelle 126 zum Empfangen eines Fahrersignals 128 zum Ansteuern der Aktuatoren 118 auf. Dies ermöglicht eine manuelle Steuerung des Fahrzeugs 100 durch einen Fahrer. Optional weist das Bewegungsmodul 104 einen Prioritätsmanager auf, der ausgebildet ist, um entweder die Aktuatorsignale 116 oder das Fahrersignal 128 priorisiert an die Aktuatorschnittstelle 114 bereitzustellen. Das Fahrersignal 128 ist beispielsweise ein durch einen Fahrer bereitgestelltes Signal, das beispielsweise durch eine Lenkbewegung eines Lenkrades des Fahrzeugs 100 oder beispielsweise durch Betätigen einer Fahrzeugbremse oder eines Gaspedals des Fahrzeugs 100 ausgelöst wird. Der Prioritätsmanager ist beispielsweise ausgebildet, um eine durch das Fahrersignal 128 veranlasste Ansteuerung der Aktuatoren 118 zu unterbinden oder zu verzögern, wenn zumindest eines der Aktuatorsignale 116 als wichtiger eingestuft wird, oder umgekehrt. Beispielsweise ist der Prioritätsmanäger ausgebildet, um eine über das Fahrersignal 129 veranlasste Erhöhung einer Drehzahl eines Antriebs des Fahrzeugs 100 zu unterbinden, wenn eines der Aktuatorsignale 116 eine durch eine Notbremsung ausgelöste Aktivierung einer Bremseinrichtung des Fahrzeugs 100 anfordert.

Die Steuervorrichtung 102 umfasst gemäß einem Ausführungsbeispiel eine Mehrzahl von Domains, mindestens aber zwei Domains. Die Haupt-Domain bezieht sich auf Fahrzeugbewegungen (Vehicle Motion; VM). Die Steuervorrichtung 102 ist dazu beispielsweise als eine skalierbare Multi-Domain ECU mit Vehicle Motion als Haupt-Domain und einer offen gestalteten Architektur für verschiedene weitere Domains sowie einer intelligenten Software (SW) zur einfachen Verbindung der Domains realisiert, um eine höhere Effizienz zu erzielen, die Latenzzeit zu reduzieren und auch Energie einzusparen. Die intelligente Software wird beispielsweise zur Realisierung der Domainschnittstelle 124 genutzt und ermöglicht gemäß einem Ausführungsbeispiel zum einen eine Anbindung unterschiedlicher weiterer Domains an die erste Domain und zum anderen einen Datenaustausch zwischen den Domains und insbesondere zwischen der ersten Domain und der mindestens einen weiteren Domain. Eine mögliche weitere Domain bezieht sich beispielsweise auf ein Energiemanagement.

Die in der Steuervorrichtung 102 realisierten unterschiedlichen Domains umfassen gemäß einem Ausführungsbeispiel unterschiedliche Softwaremodule, die unter Verwendung einer gemeinsamen Hardware der Steuervorrichtung 102 realisiert sind.

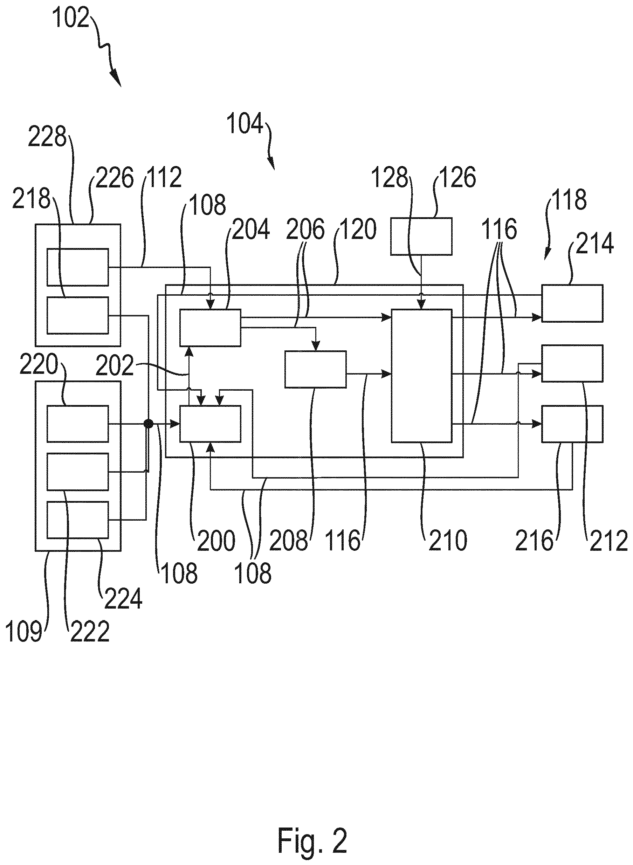

Fig. 2 zeigt eine schematische Darstellung eines Ausführungsbeispiels einer Steuervorrichtung 102. Die Steuervorrichtung 102 entspricht oder ähnelt beispielsweise der in Fig. 1 beschriebenen Steuervorrichtung 102 und ist beispielsweise für ein Fahrzeug realisierbar, wie es in Fig. 1 beschrieben wurde.

Die Steuervorrichtung 102 weist auch gemäß diesem Ausführungsbeispiel die Bestimmeinrichtung 120 auf, die wiederum eine Sensoreinrichtung 200 zum Bestimmen eines kombinierten Sensorsignals 202 aus den Sensorsignalen 108, eine Optimierungseinrichtung 204 zum Bestimmen eines optimierten Trajektoriensignals 206 aus dem Trajektoriensignal 112 und dem kombinierten Sensorsignal 202 sowie eine Dekodiereinrichtung 208 zum Bestimmen der Aktuatorsignale 116 aus dem optimierten Trajektoriensignal 206 aufweist. Lediglich optional sind die Sensoreinrichtung 200, die Optimierungseinrichtung 204 und die Dekodiereinrichtung 208 redundant ausgeformt. Gemäß diesem Ausführungsbeispiel weist die Bestimmeinrichtung 120 lediglich optional den Prioritätsmanager 210 auf, der ausgebildet ist, um entweder die Aktuatorsignale 116 oder das Fahrersignal 128 an die Aktuatorschnittstelle und somit an mindestens einen der Aktuatoren 118 bereitzustellen, sodass mindestens eine Fahrzeugfunktion des Fahrzeugs unter Verwendung des optimierten Trajektoriensignals 206 und mindestens eines der Aktuatorsignale 116 priorisiert angesteuert wird. Die Aktuatoren 118 sind beispielsweise als ein Lenkaktuator 212, ein Bremsaktuator 214 und als ein Fahrwerkaktuator 216 ausgeformt, die gemäß einem Ausführungsbeispiel jeweils zumindest einen Sensor aufweisen und zusätzlich zu der Sensoreinheit 109 Sensorsignale 108 an die Sensoreinrichtung 200 bereitstellen. Beispielsweise zeigen solche Sensorsignale 108 einen von dem Linkaktuator 212 eingestellten Lenkwinkel einer Lenkung des Fahrzeugs, eine Bremskraft einer Bremsanlage des Fahrzeugs oder eine Einfederung eines Fahrwerks des Fahrzeugs an. Die Sensorsignale 108 der Sensoren der Aktuatoren 212, 214, 216 werden zusätzlich oder alternativ zu Sensorsignalen einer Umfelderfassungseinrichtung 218, beispielsweise einer Kamera, eines Schalters 220, einem Temperatursensor 222 und/oder einem Regensensor 224 des Fahrzeugs bereitgestellt und von der Sensoreinrichtung 200 empfangen.

In anderen Worten ausgedrückt ist gemäß diesem Ausführungsbeispiel insbesondere das in Fig. 1 beschriebene Bewegungsmodul 104 der Steuervorrichtung 102 beschrieben. Die weitere Domain ist gemäß diesem Ausführungsbeispiel nicht beschrieben, da diese frei wählbar ist. Über beispielsweise eine ADAS-Domain 226 (Advanced Driver-Assistance-System) empfängt die Bestimmeinrichtung 120 das Trajektoriensignal 112 einer Trajektorieneinrichtung 228. Beispielsweise ist die Trajektorieneinrichtung 228 ausgebildet, um die von dem Trajektoriensignal 112 repräsentierte Trajektorie zu bestimmen oder einzulesen. Die Optimierungseinrichtung 204 optimiert daraufhin auf Fahrerwünsche, wie beispielsweise Energieverbrauch oder Fahreigenschaft die Trajektorie des Fahrzeugs. Fahreigenschaften sind beispielsweise einstellbare Fahrmodi, wie beispielsweise ein Komfort-Modus, ein Sport-Modus oder ein Gelände-Modus. Die Dekodiereinrichtung 208, die beispielsweise auch als Trajektorie-Decoder bezeichnet wird, erstellt beispielsweise aus Wegpunkten Sollmomente für die Aktuatoren 118. Unter Verwendung der Sensoreinrichtung 200 erfolgt beispielsweise eine Rückführung und Informationsübermittlung an die Optimierungseinrichtung 204 unter Verwendung des Sensorsignals 202. Der Prioritätsmanager 210 wählt schließlich zwischen unterschiedlichen Eingängen, die auch als Schnittstellen beschrieben sind, welcher der Eingänge die höchste Priorität erhält. Beispielsweise kann ein Notbremsassistent des Fahrzeugs eine höhere Priorisierung erhalten als ein Fahrerwunsch, der beispielsweise mittels des Fahrersignals 128 über eine Fahrerschnittstelle 126 empfangen wird. Aus Sicherheitsgründen sind beispielsweise die Sensoreinrichtung 200, die Dekodiereinrichtung 208 sowie der Prioritätsmanager 210 redundant ausgelegt.

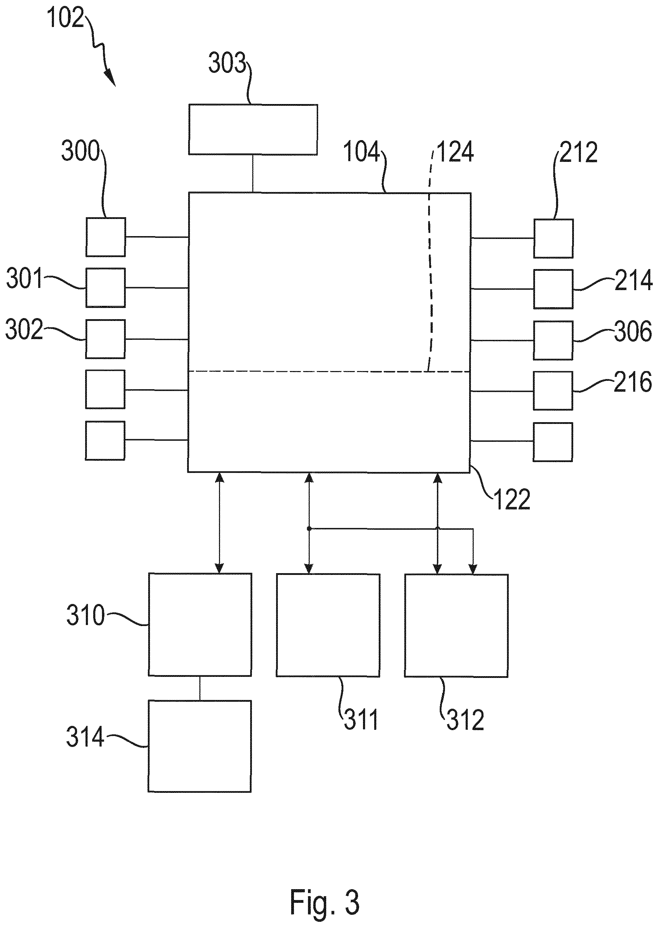

Fig. 3 zeigt eine schematische Darstellung eines Ausführungsbeispiels einer Steuervorrichtung 102. Gemäß diesem Ausführungsbeispiel ist die Steuervorrichtung 102 im Vergleich zu der in Fig. 2 beschriebenen Steuervorrichtung 102 funktional dargestellt, um eine Domainarchitektur der Steuervorrichtung 102 zu verdeutlichen. Die Steuervorrichtung 102 ähnelt jedoch der in Fig. 2 beschriebenen Steuervorrichtung 102 und ist für ein Fahrzeug verwendbar, wie es beispielsweise in Fig. 1 beschrieben wurde. Gemäß diesem Ausführungsbeispiel weist die Sensorvorrichtung 102 das in Fig. 1 beschriebene weitere Modul 122 auf, das als weitere Domain ausgeführt ist und über die Domainschnittstelle 124 mit der ersten Domain und somit mit dem Bewegungsmodul 104 verbunden ist. Die erste Domain wird beispielsweise als Vehicle Motion Domain (VMD) bezeichnet und ist entsprechend ihres Namens zum Ansteuern von bewegungsspezifischen Fahrzeugfunktionen des Fahrzeugs vorgesehen.

Die Steuervorrichtung 102 ist eingangsseitig mit Sensoren einer Mehrzahl von Eingabeeinrichtungen, beispielsweise eines Lenkrads 300, eines Gaspedals 301 und/oder eines Netzanschlusses 303 des Fahrzeugs verbunden. Die Steuervorrichtung 102 ist weiterhin gemäß einem Ausführungsbeispiel mit einer Energieversorgungseinrichtung 303, beispielsweise einer Batterie, verbunden, die ausgebildet ist, um elektrische Energie für einen Betrieb der Steuervorrichtung 102 bereitzustellen. Ausgangsseitig ist die Steuervorrichtung 102 mit Aktuatoren, beispielsweise einen Lenkaktuator 212, einen Bremsaktuator 214, einen Dämpferaktuator 306 oder einen Fahrwerkaktuator 216 verbunden

Das weitere Modul 122 beziehungsweise die weitere Domain ist beispielsweise frei wählbar, sodass das weitere Modul 122 mit einer Mehrzahl von zusätzlichen Domains 310, 311, 312, wie beispielsweise einer Domain, die in Verbindung mit Energiemanagement steht, verknüpfbar ist. Die zusätzlichen Domains 310, 311, 312 sind beispielsweise auch untereinander koppelbar und können optional auch mit beispielsweise einer Cloud 314 verbunden sein.

In anderen Worten ausgedrückt ist das Bewegungsmodul 104 für eine longitudinale, laterale und vertikale Bewegung des Fahrzeugs verantwortlich. Die Steuervorrichtung 102, die auch als Video Motion Domain (VMD) Engine Control Unit (ECU) bezeichnet wird, ist dabei an Sensoren als Input, hier beispielhaft Sensoren des Lenkrads 300, des Gaspedals 301 und/oder des Netzanschlusses 303 und Aktuatoren als Output, hier beispielhaft dem Lenkaktuator 212, dem Bremsaktuator 214, dem Dämpferaktuator 306 oder dem Fahrwerkaktuator 216, sowie mit den zusätzlichen Domains 310, 311, 312 verbunden. Die Steuervorrichtung 102 weist dazu verschiedene Kommunikationskanäle auf, die beispielsweise als Schnittstellen bezeichnet werden und ausgebildet sind, um beispielsweise mit den genannten Sensoren, Aktuatoren und den anderen Domains 310, 311, 312 zu kommunizieren. Dies erfolgt beispielsweise mittels Ethernet, Controller Area Network (CAN), Local Interconnect Network (LIN) und/oder Digital Input und Output.

Vorteilhafterweise kann über die Domainschnittstelle 124 auch ein Datenaustausch zwischen der ersten Domain, also dem Bewegungsmodul 104, und den anderen Domains 310, 311, 312 erfolgen. Auf diese Weise können die anderen Domains 310, 311, 312 beispielsweise auf Sensorsignale von mit der Steuervorrichtung 102 gekoppelten Sensoren zugreifen oder an die Steuervorrichtung 102 angekoppelte Aktuatoren ansteuern. Optional können die anderen Domains 310, 311, 312 über den Netzanschluss 303 der Steuervorrichtung 102 mit Energie versorgt werden. Gemäß einem Ausführungsbeispiel wird eine elektronische Schaltung der Steuervorrichtung 102 verwendet, um die Funktionalitäten sowohl des Bewegungsmoduls 104, des weiteren Moduls 122 sowie der anderen Domains 310, 311, 312 zu realisieren.

Gemäß einem Ausführungsbeispiel ist die Steuervorrichtung 102 ausgebildet, um eine intelligente Software auszuführen, die eine Ankopplung der anderen Domains 310, 311, 312 ermöglicht. Die anderen Domains 310, 311, 312 sind dabei lediglich beispielhaft dargestellt. Es können auch weniger oder mehr als die gezeigten drei anderen Domains 310, 311, 312 angekoppelt werden.

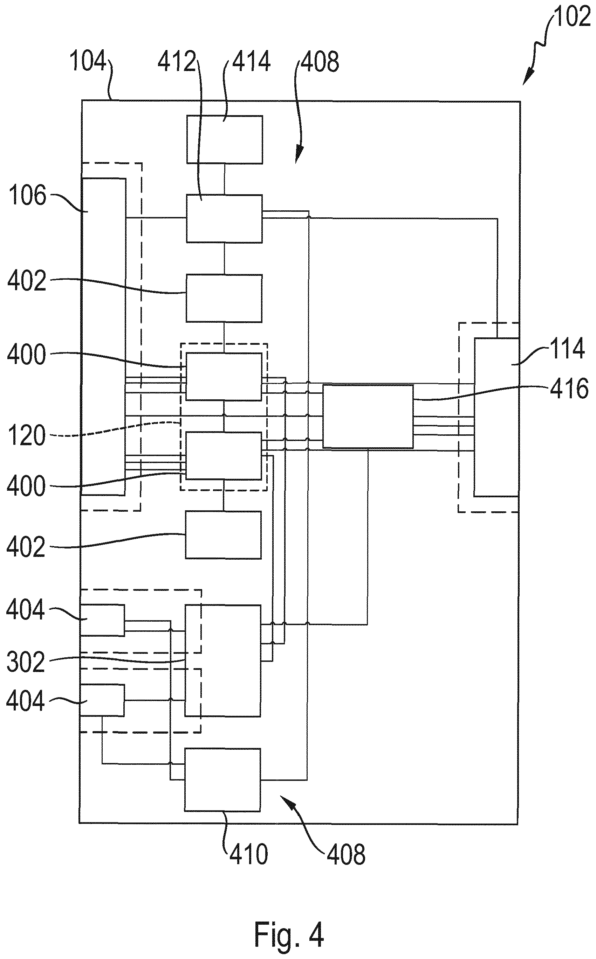

Fig. 4 zeigt eine schematische Darstellung eines Ausführungsbeispiels einer Steuervorrichtung 102. Genauer gesagt ist gemäß diesem Ausführungsbeispiel ein optionaler Aufbau des Bewegungsmoduls 104 dargestellt. Die Steuervorrichtung 102 entspricht oder ähnelt mindestens der in einer der Figuren 1 bis 3 beschriebenen Sensorvorrichtung 102, beziehungsweise dem in mindestens einer der Figuren 1 bis 3 beschriebenen Bewegungsmodul 104 der Steuervorrichtung 102.

Die Steuervorrichtung 102 weist die Sensorschnittstelle 106, über welche die Sensorsignale empfangen werden, sowie die Aktuatorschnittstelle 114 auf, über welche die Aktuatorsignale bereitgestellt werden. Gemäß diesem Ausführungsbeispiel weist die Steuervorrichtung 102 die Bestimmeinrichtung 120 auf, die wiederum lediglich optional zwei redundante Mikroprozessoren 400 aufweist. Jeder der Mikroprozessoren 400 ist dabei mit je einer Absicherungseinheit 402, einem sogenannten Security Controller, gekoppelt. Die Mikroprozessoren 400 und somit die Bestimmeinrichtung 120 sind gemäß diesem Ausführungsbeispiel zwischen die Sensorschnittstelle 106 und die Aktuatorschnittstelle 114 geschaltet.

Das Bewegungsmodul 104 weist gemäß diesem Ausführungsbeispiel weiterhin zwei redundante Energieversorgungsschnittstellen 404 und eine Energieversorgungseinrichtung 302 zum Versorgen des Bewegungsmoduls 104 mit Energie aus zumindest einer der Energieversorgungsschnittstellen 404 auf. Dabei ist eine mehrteilige Standversorgungseinrichtung 408 des Bewegungsmoduls 104 mit einer der Energieversorgungsschnittstellen 404 elektrisch verbunden. Die Standversorgungseinrichtung 408 ist beispielsweise ausgebildet, um einen Teil des Bewegungsmoduls 104 zu deaktivieren, wenn sich das Fahrzeug in einem Ruhezustand, beispielsweise in geparktem Zustand, befindet. Die Standversorgungseinrichtung 408 weist dazu beispielsweise eine Energieversorgungslogik 410, eine sogenannte Standstill Power Supply Logic und ein mit der Energieversorgungslogik 410 verbundenes Steuerelement 412, beispielsweise in Form eines weiteren Mikrokontrollers auf. Das Steuerelement 412 ist beispielsweise mit einer weiteren Absicherungseinheit 414, einem sogenannten Security Controller, gekoppelt. Beispielsweise sind die Absicherungseinheiten 402, 414 ausgeformt, um bei einem Ausfall einer Energieversorgung von einer Versorgungsspannung auf eine Notversorgungsspannung umzuschalten. Das Bewegungsmodul 104 weist weiterhin eine Sicherheitseinrichtung 416, einen sogenannten Safety Controller, auf, die mit der Sensorschnittstelle 106 und der Aktuatorschnittstelle 114 verbunden ist.

In anderen Worten ausgedrückt ermöglicht die Steuervorrichtung 102 gemäß diesem Ausführungsbeispiel eine redundante Spannungsversorgung zur Ausfallsicherheit.

Die Energieversorgungseinrichtung 302 ist dabei für die Spannungsversorgung sowie für ein Umschalten zwischen den über die Energieversorgungsschnittstellen 404 bereitgestellten Spannungen verantwortlich, wenn eine der Spannungen entfällt. Beispielsweise werden unter Verwendung der Standversorgungseinrichtung 408 bei einem abgestellten Fahrzeug lediglich die Baugruppen versorgt, die in diesem Zustand benötigt werden. Der übrigen Baugruppen der Steuervorrichtung 102 werden beispielsweise weggeschaltet, beispielsweise von der Energieversorgung getrennt, wodurch der Stromverbrauch gesenkt und die Lebensdauer erhöht werden kann. Optional ist in einem alternativen Ausführungsbeispiel ein Kondensator implementiert, um beispielsweise bei einem kompletten Abriss der Spannungsversorgung eine Steuerung des Fahrzeugs entweder an den Fahrer zu übergeben oder einen sicheren Status des Fahrzeuges, wie beispielsweise eine Notbremsung oder ein Lenken zu einem Seitenstreifen, zu erreichen. Der Kondensator kann dabei lediglich optional je nach Anforderung auch eine DC-Leitung, also eine der Energieversorgungsschnittstellen 404, ersetzen. Die Standversorgungseinrichtung 408 ist ebenfalls optional und wird beispielsweise für eine Powerline Communication eingesetzt, wo eine lange Aktiv-Lebensdauer erforderlich ist, und/oder aber auch als sogenannter Standby Controller, der beispielsweise Funktionen hostet, die bei abgestelltem Fahrzeug noch laufen, wie beispielsweise Fahrzeugzugang, Diagnose und/oder auch für eine Echtzeituhr (Real Time Clock). Beispielsweise geht damit ein Spannungsversorgungskonzept zur Stromverbrauchreduzierung bei einem abgestellten Fahrzeug einher, wobei die Spannungsversorgung lediglich optional redundant ausgeführt ist.

Die Sensorschnittstelle 106 und die Aktuatorschnittstelle 114 sind auch als Kommunikationsschnittstellen bezeichnet, wie beispielsweise LIN, CAN, CAN-FD, CAN-XL, FR, Ethernet, Powerline Communication, Digital Input und Output oder Analog Input. Für eine Cyber-Sicherheit sind die Absicherungseinheiten 402, 414 mit entsprechender Speichereinheit vorgesehen, um eine sichere Kommunikation (ComSec), eine sichere Diagnose (DiagSec) und einen sicheren Bootloader (BootSec) zu ermöglichen.

Weiterhin weist die Bestimmeinrichtung 120 mindestens den einen, aber optional auch mehrere Mikroprozessoren 400 auf, die beispielsweise unter anderem für Redundanz und Lebensdauer verwendet werden. Die Funktionalitäten der Mikroprozessoren 400 sind beispielsweise auch auf einem einzigen Mikroprozessor realisierbar, die aber auf unterschiedlichen Kernen (Cores) laufen und wobei eine gegenseitige Beeinflussung beispielsweise mittels einer Speichersicherung vermieden wird. Weiterhin ist eine Degradation entsprechend vorgesehen. Diese erfolgt beispielsweise sowohl bei einem "Schlafengehen" des Steuergerätes in mehreren Stufen, als auch bei niedriger Batteriespannung oder in einer Gefahrensituation, wie beispielsweise im Crashfall, sodass beispielsweise ein Teil der auch als Steuergerät bezeichneten Steuervorrichtung 102 abgeschaltet wird. Hierfür ist eine sinnvolle Aufteilung der Funktionen auf die verschiedenen Mikroprozessoren 400 vorzunehmen. Die beispielsweise als Safety Controller ausgeführte Sicherheitseinrichtung 416 ist für die Erfüllung von Sicherheitsanforderungen vorgesehen, auch Automotive Safety Integrity Level (ASIL) genannt. Generell sind lediglich optional die Eingänge (IN, DC) und die Ausgänge (OUT) galvanisch getrennt ausgelegt.

Fig. 5 zeigt ein Ablaufdiagramm eines Ausführungsbeispiels eines Verfahrens 500 zum Steuern eines Fahrzeugs. Das Verfahren 500 ist beispielsweise von einer Steuervorrichtung durchführbar, wie sie beispielsweise in einer der Figuren 1 bis 4 beschrieben wurde. Das Verfahren 500 umfasst dabei einen Schritt 502 des Empfangens von Sensorsignalen durch eine erste Domain, einen Schritt 504 des Empfangens eines eine Trajektorie des Fahrzeugs repräsentierenden Trajektoriensignals durch die erste Domain, einen Schritt 506 des Bestimmens der Aktuatorsignale unter Verwendung der Sensorsignale und des Trajektoriensignals innerhalb der ersten Domain sowie einen Schritt 508 des Ausgebens von Aktuatorsignalen zum Ansteuern von Aktuatoren durch die erste Domain.

### Bezugszeichen

- 100: Fahrzeug
- 102: Steuervorrichtung
- 104: Bewegungsmodul
- 106: Sensorschnittstelle
- 108: Sensorsignal
- 109: Sensoreinheit
- 110: Trajektorienschnittstelle
- 112: Trajektoriensignal
- 114: Aktuatorschnittstelle
- 116: Aktuatorsignal
- 118: Aktuator
- 120: Bestimmeinrichtung
- 122: weiteres Modul
- 124: Domainschnittstelle
- 126: Fahrerschnittstelle
- 128: Fahrersignal

- 200: Sensoreinrichtung
- 202: kombiniertes Sensorsignal
- 204: Optimierungseinrichtung
- 206: optimiertes Trajektoriensignal
- 208: Dekodiereinrichtung
- 210: Prioritätsmanager
- 212: Lenkaktuator
- 214: Bremsaktuator
- 216: Fahrwerkaktuator
- 218: Umfelderfassungseinrichtung
- 220: Schalter
- 222: Temperatursensor
- 224: Regensensor
- 226: ADAS-Domain
- 300: Lenkrad
- 301: Gaspedal
- 302: Netzanschluss
- 303: Energieversorgungseinrichtung
- 306: Dämpferaktuator
- 310, 311, 312: andere Domains
- 314: Cloud

- 400: Mikroprozessor
- 402: Absicherungseinheit
- 404: Energieversorgungsschnittstellen
- 408: Standversorgungseinrichtung
- 410: Energieversorgungslogik
- 412: Steuerelement
- 414: weitere Absicherungseinheit
- 416: Sicherheitseinrichtung

- 500: Verfahren zum Betreiben einer Steuervorrichtung
- 502: Schritt des Empfangens von Sensorsignalen
- 504: Schritt des Empfangens eines Trajektoriensignals
- 506: Schritt des Ausgebens von Aktuatorsignalen
- 508: Schritt des Bestimmens von Aktuatorsignalen

## Patentansprüche

1. Steuervorrichtung (102) für ein Fahrzeug (100), wobei die Steuervorrichtung (102) die folgenden Merkmale aufweist:
ein Bewegungsmodul (104) zum Steuern einer Bewegung des Fahrzeugs (100), wobei das Bewegungsmodul (102) als eine erste Domain ausgeführt ist, und eine Sensorschnittstelle (106) zum Empfangen von Sensorsignalen (108), eine Trajektorienschnittstelle (110) zum Empfangen eines eine Trajektorie des Fahrzeugs (100) repräsentierenden Trajektoriensignals (112), eine Aktuatorschnittstelle (114) zum Ausgeben von Aktuatorsignalen (116) zum Ansteuern von Aktuatoren (118), und eine Bestimmeinrichtung (120) zum Bestimmen der Aktuatorsignale (116) unter Verwendung der Sensorsignale (108) und des Trajektoriensignals (112) aufweist, und ein weiteres Modul (122), das als eine weitere Domain ausgeführt ist und über eine Domainschnittstelle (124) mit der ersten Domain verbunden ist,
**dadurch gekennzeichnet, dass** die Steuervorrichtung eine elektronische Schaltung aufweist, die ausgebildet ist, um sowohl eine Funktionalität der Bestimmeinrichtung (120) als auch eine Funktionalität des weiteren Moduls (122) bereitzustellen.

2. Steuervorrichtung (102) gemäß einem der vorangegangenen Ansprüche, wobei das Bewegungsmodul (104) eine Fahrerschnittstelle (126) zum Empfangen eines Fahrersignals (128) zum Ansteuern der Aktuatoren (118) und einen Prioritätsmanager (210) aufweist, der ausgebildet ist, um entweder die Aktuatorsignale (116) oder das Fahrersignal (128) an die Aktuatorschnittstelle (114) bereitzustellen.

3. Steuervorrichtung (102) gemäß einem der vorangegangenen Ansprüche, wobei die Sensorschnittstelle (106) ausgebildet ist, um die Sensorsignale (108) von einer Umfelderfassungseinrichtung (218), einem Schalter (220), einem Temperatursensor (222), einem Regensensor (224), einem Sensor eines Lenkaktuators (212), einem Sensor eines Bremsaktuators (214) und/oder einem Sensor eines Fahrwerkaktuators (212) zu empfangen.

4. Steuervorrichtung (102) gemäß Anspruch 3, wobei die Aktuatorschnittstelle (114) ausgebildet ist, um die Aktuatorsignale (116) an den Lenkaktuator (212), den Bremsaktuator (214) und/oder den Fahrwerkaktuator (216) auszugeben.

5. Steuervorrichtung (102) gemäß einem der vorangegangenen Ansprüche, wobei die Bestimmeinrichtung (120) eine Sensoreinrichtung (200) zum Bestimmen eines kombinierten Sensorsignals (202) aus den Sensorsignalen (108), eine Optimierungseinrichtung (204) zum Bestimmen eines optimierten Trajektoriensignals (206) aus dem Trajektoriensignal (112) und dem kombinierten Sensorsignal (202), und eine Dekodiereinrichtung (208) zum Bestimmen der Aktuatorsignale (116) aus dem optimierten Trajektoriensignal (206) aufweist.

6. Steuervorrichtung (102) gemäß Anspruch 5, wobei die Sensoreinrichtung (200), die Optimierungseinrichtung (204) und die Dekodiereinrichtung (208) redundant ausgeformt sind.

7. Steuervorrichtung (102) gemäß einem der vorangegangenen Ansprüche, wobei die Bestimmeinrichtung (120) unter Verwendung redundanter Mikroprozessoren (400) realisiert ist.

8. Steuervorrichtung (102) gemäß einem der vorangegangenen Ansprüche, wobei die Steuervorrichtung (102) zwei redundante Energieversorgungsschnittstellen (402) und eine Energieversorgungseinrichtung (302) zum Versorgen des Bewegungsmoduls (104) mit Energie aus zumindest einer der Energieversorgungsschnittstellen (402) aufweist.

9. Steuervorrichtung (102) gemäß einem der vorangegangenen Ansprüche, wobei die Steuervorrichtung (102) eine Standversorgungseinrichtung (408) aufweist, die ausgebildet ist, um einen Teil des Bewegungsmoduls (104) zu deaktivieren, wenn sich das Fahrzeug (100) in einem Ruhezustand befindet.

10. Steuervorrichtung (102) gemäß einem der vorangegangenen Ansprüche, wobei die Steuervorrichtung (102) eine Sicherheitseinrichtung (416) aufweist, die mit der Sensorschnittstelle (106), der Bestimmeinrichtung (120) und der Aktuatorschnittstelle (114) verbunden ist.

## Claims

1. Control apparatus (102) for a vehicle (100), the control apparatus (102) comprising the following features:
a motion module (104) for controlling a motion of the vehicle (100), wherein the motion module (102) is designed as a first domain and comprises a sensor interface (106) for receiving sensor signals (108), a trajectory interface (110) for receiving a trajectory signal (112) representing a trajectory of the vehicle (100), an actuator interface (114) for outputting actuator signals (116) for actuating actuators (118), and a determining device (120) for determining the actuator signals (116) by using the sensor signals (108) and the trajectory signal (112); and a further module (122), which is designed as a further domain and is connected to the first domain via a domain interface (124),
**characterized in that** the control apparatus comprises an electronic circuit, which is designed to provide both a functionality of the determining device (120) and a functionality of the further module (122).

2. Control apparatus (102) according to one of the preceding claims, wherein the motion module (104) comprises a driver interface (126) for receiving a driver signal (128) for actuating the actuators (118) and a priority manager (210), which is designed to provide either the actuator signals (116) or the driver signal (128) to the actuator interface (114).

3. Control apparatus (102) according to one of the preceding claims, wherein the sensor interface (106) is designed to receive the sensor signals (108) from an environment sensing device (218), a switch (220), a temperature sensor (222), a rain sensor (224), a sensor of a steering actuator (212), a sensor of a brake actuator (214) and/or a sensor of a chassis actuator (212).

4. Control apparatus (102) according to Claim 3, wherein the actuator interface (114) is designed to output the actuator signals (116) to the steering actuator (212), the brake actuator (214) and/or the chassis actuator (216).

5. Control apparatus (102) according to one of the preceding claims, wherein the determining device (120) comprises a sensor device (200) for determining a combined sensor signal (202) from the sensor signals (108), an optimizing device (204) for determining an optimized trajectory signal (206) from the trajectory signal (112) and the combined sensor signal (202), and a decoding device (208) for determining the actuator signals (116) from the optimized trajectory signal (206).

6. Control apparatus (102) according to Claim 5, wherein the sensor device (200), the optimizing device (204) and the decoding device (208) are formed redundantly.

7. Control apparatus (102) according to one of the preceding claims, wherein the determining device (120) is realized by using redundant microprocessors (400).

8. Control apparatus (102) according to one of the preceding claims, wherein the control apparatus (102) comprises two redundant energy supply interfaces (402) and an energy supply device (302) for supplying the motion module (104) with energy from at least one of the energy supply interfaces (402).

9. Control apparatus (102) according to one of the preceding claims, wherein the control apparatus (102) comprises a standstill supply device (408), which is designed to deactivate part of the motion module (104) when the vehicle (100) is in a state of rest.

10. Control apparatus (102) according to one of the preceding claims, wherein the control apparatus (102) comprises a safety device (416), which is connected to the sensor interface (106), the determining device (120) and the actuator interface (114).

## Revendications

1. Appareil de commande (102) pour un véhicule (100), l'appareil de commande (102) présentant les caractéristiques suivantes :
un module de déplacement (104) pour commander un déplacement du véhicule (100), dans lequel le module de déplacement (102) est conçu sous la forme d'un premier domaine, et comprend une interface de capteur (106) pour recevoir des signaux de capteur (108), une interface de trajectoire (110) pour recevoir un signal de trajectoire (112) représentant une trajectoire du véhicule (100), une interface d'actionneur (114) pour délivrer des signaux d'actionneur (116) afin de commander des actionneurs (118), et un dispositif de détermination (120) pour déterminer les signaux d'actionneur (116) à l'aide des signaux de capteur (108) et du signal de trajectoire (112) ; et un module supplémentaire (122), réalisé sous la forme d'un domaine supplémentaire et relié au premier domaine par l'intermédiaire d'une interface de domaine (124),
**caractérisé en ce que** le dispositif de commande comprend un circuit électronique qui est conçu pour assurer à la fois une fonctionnalité du dispositif de détermination (120) et une fonctionnalité du module supplémentaire (122).

2. Dispositif de commande (102) selon l'une quelconque des revendications précédentes, dans lequel le module de déplacement (104) comprend une interface de commande (126) pour recevoir un signal de commande (128) destiné à commander les actionneurs (118) et un gestionnaire de priorité (210), qui est conçu pour fournir soit les signaux d'actionneur (116) soit le signal de commande (128) à l'interface d'actionneur (114).

3. Dispositif de commande (102) selon l'une quelconque des revendications précédentes, dans lequel l'interface de capteur (106) est conçue pour recevoir les signaux de capteur (222) en provenance d'un dispositif de détection d'environnement (224), d'un commutateur (212), d'un capteur de température (108), d'un capteur de pluie (218), d'un capteur d'un actionneur de direction (220), d'un capteur d'un actionneur de frein (214) et/ou d'un capteur d'un actionneur de châssis (212).

4. Dispositif de commande (102) selon la revendication 3, dans lequel l'interface d'actionneur (114) est conçue pour délivrer les signaux d'actionneur (116) à l'actionneur de direction (212), à l'actionneur de frein (214) et/ou à l'actionneur de châssis (216).

5. Dispositif de commande (102) selon l'une quelconque des revendications précédentes, dans lequel le dispositif de détermination (120) comprend un dispositif capteur (200) pour déterminer un signal de capteur combiné (202) à partir des signaux de capteur (108), un dispositif d'optimisation (204) pour déterminer un signal de trajectoire optimisé (206) à partir du signal de trajectoire (112) et du signal de capteur combiné (202), et un dispositif de décodage (208) pour déterminer les signaux d'actionneur (116) à partir du signal de trajectoire optimisé (206).

6. Dispositif de commande (102) selon la revendication 5, dans lequel le dispositif capteur (200), le dispositif d'optimisation (204) et le dispositif de décodage (208) sont réalisés de manière redondante.

7. Dispositif de commande (102) selon l'une quelconque des revendications précédentes, dans lequel le dispositif de détermination (120) est réalisé par utilisation de microprocesseurs redondants (400).

8. Dispositif de commande (102) selon l'une quelconque des revendications précédentes, dans lequel le dispositif de commande (102) comprend deux interfaces d'alimentation en énergie redondantes (402) et un dispositif d'alimentation (302) pour alimenter en énergie le module de déplacement (104) à partir d'au moins l'une des interfaces d'alimentation en énergie (402).

9. Dispositif de commande (102) selon l'une quelconque des revendications précédentes, dans lequel le dispositif de commande (102) comprend un dispositif d'alimentation fixe (408), qui est conçu pour désactiver une partie du module de déplacement (104) lorsque le véhicule (100) se trouve dans un état de repos.

10. Dispositif de commande (102) selon l'une quelconque des revendications précédentes, dans lequel le dispositif de commande (102) comprend un dispositif de sécurité (416) qui est relié à l'interface de capteur (106), au dispositif de détermination (120) et à l'interface d'actionneur (114).
